# EUROPEAN PATENT APPLICATION

(11) **EP 2 564 950 A2**
(43) Date of publication of application: **06.03.2013**
(21) Application number: 12183159.8
(22) Date of filing: 05.09.2012
(51) Int. Cl.: B21K 1/76

(54) **Outer joint member for constant velocity universal joint and method for manufacturing the same**

(30) Priority: 05.09.2011 JP 2011192757
(71) Applicant: NTN Corporation, Osaka-shi, Osaka 550-0003 (JP)
(72) Inventor: Ikuyama, Yoshitada, Iwata-shi, Shizuoka 4380037 (JP); Shibata, Kunihiro, Iwata-shi, Shizuoka 4380037 (JP); Fukawa, Hideki, Iwata-shi, Shizuoka 4380037 (JP)
(74) Representative: Grünecker, Kinkeldey, Stockmair & Schwanhäusser

(57) **Abstract**

An outer joint member (1) which has a cup portion (2) formed, on the inner surface thereof, with a plurality of track grooves (5) extending in the axial direction, the cup portion (2) having a chamfering portion (8, 9) provided in the region between the track grooves (5) at the inner peripheral edge thereof, at least the inner surface and the outer surface of the cup portion being shaped by forging. The chamfering portion (8, 9) includes a first chamfering portion (8) for allowing the angle shift of the joint, and second chamfering portions (9) which are provided adjacent to both peripheral sides of the first chamfering portion (8) and are inclined in the direction different from the first chamfering portion (8).

## Description

### Background of the Invention

### Field of the Invention

The present invention relates to an outer joint member for constant velocity universal joint which is used in a power transmission system of an automobile and various industrial machines and transmits rotation power between a driving shaft and a driven shaft at a constant velocity, and a method for manufacturing the same. More specifically, the present invention relates to an outer joint member for a plunging type constant velocity universal joint which allows angle shift and axial shift between a driving shaft and a driven shaft, and a method for manufacturing the same.

### Description of the Related Art

As is well known in the art, a constant velocity universal joint mainly has an outer joint member, and a joint internal component (such as an inner joint member and a torque transmission member) accommodated in the inner periphery thereof. Of these, the outer joint member which integrally has a bottomed cylindrical cup portion formed, on the inner surface thereof, with a plurality of track grooves extending in the axial direction, and a shaft portion extending axially from the bottom of the cup portion has been widely used. A chamfering portion (entrance chamfer) is provided in the region between the track grooves at the inner peripheral edge of the cup portion in order to allow the angle shift of the joint (or to avoid the interference between a shaft extending from the inner joint member and the outer joint member when the joint is angle shifted).

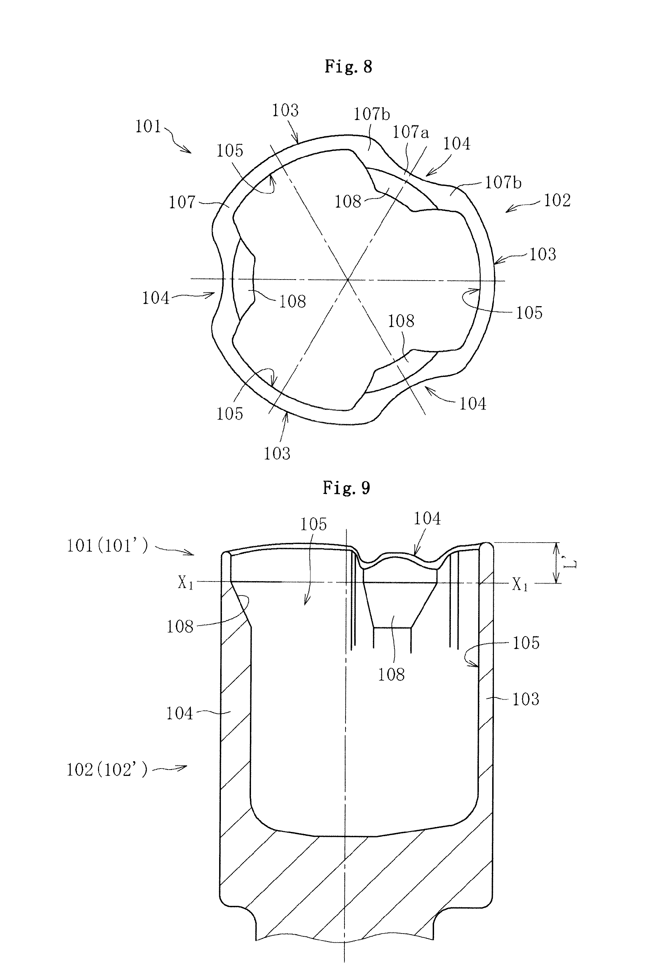

Here, Fig. 8 shows a typical example of an outer joint member 101 for a tripod type constant velocity universal joint which is a kind of plunging type constant velocity universal joint. In the outer joint member 101 shown in the drawing, a cup portion 102 is formed in a corolla cross section and has three large-diameter portions 103 and three small-diameter portions 104 which are alternately provided in the peripheral direction, the large-diameter portions 103 being formed, on the inner peripheries thereof, with track grooves 105. The cup portion 102 can have an outer peripheral surface formed in a truly circular cross section. However, the cup portion 102 of the form shown in Fig. 8 is advantageous in that it can be thinned in the outer periphery thereof to reduce the constant velocity universal joint in weight, thereby contributing to increased gas mileage in an automobile. In the outer joint member 101, the small-diameter portions 104 are each formed, at the inner peripheral edge thereof, with a chamfering portion 108 for allowing the angle shift of the joint.

Such an outer joint member can be manufactured by making full use of various processing methods, such as machining typified by cutting and turning and plastic working typified by forging. However, machining limits improvement in production efficiency and yield. Therefore, plastic working is adopted often where possible. For instance, Japanese Unexamined Patent Publication No. 2002-213476 discloses a method for shaping an outer joint member having the cup portion of the form shown in Fig. 8 by forging.

Specifically, a method for manufacturing an outer joint member which integrally has a cup portion which has large-diameter portions and small-diameter portions which are alternately provided in the peripheral direction, the large-diameter portions being formed, on the inner peripheries thereof, with three track grooves extending in the axial direction, and a shaft portion extending axially and outward from the bottom of the cup portion, the cup portion having a chamfering portion provided at the inner peripheral edge of each of the small-diameter portions thereof, the method including an upsetting step of shaping an intermediate material which has a small-diameter section and a large-diameter section, the large-diameter section having, on the end surface thereof, a recess with a tapered surface in which part of the inner periphery thereof has the outline shape of the chamfering portion, a cup shaping step of shaping the intermediate material into a shape having the cup portion by combined extrusion of forward extrusion and rearward extrusion, and an ironing step of shaping the cup portion into finishing size and shape (claim 2 in Japanese Patent Document 1). According to such a manufacturing method, each chamfering portion of the outer joint member can be formed by plastic working, and other portions can be shaped with a die having a simple shape.

### Related Art Documents

Patent Document 1: JP 2002-213476 A

However, in the outer joint member having the conventional configuration, the incorporation ability of the joint internal component, in particular, the torque transmission member, is susceptible to improvement.

In addition, in the manufacturing method, the shape of the opening end of the cup portion after the completion of forging (ironing step) is not stable. Consequently, significant finishing is necessary after the completion of forging, resulting in increased manufacturing cost and deteriorated yield. The state will be described with reference to Fig. 9. Fig. 9 is a cross-sectional view in parallel with the axis of the outer joint member immediately after the completion of the ironing step (a raw shaped material 101' of the outer joint member) when the outer joint member shown in Fig. 8 is manufactured by using the method described in the Japanese Patent Document 1. As is apparent from Fig. 9, when the method described in the Japanese Patent Document 1 is adopted, the opening end of the small-diameter portion 104 configuring the cup portion 102 is greatly waved immediately after the completion of the ironing step. Specifically, the opening end of the small-diameter portion 104 is greatly waved in such a manner that the peripheral center region thereof is relatively high and that the peripheral end regions are relatively low. This is because with ironing, the axial extension amount generated in the material (the cup-shaped portion of the material) is larger in a peripheral region 107a (see Fig. 8) of an opening end surface 107 which has a relatively small width dimension than in peripheral regions 107b (see Fig. 8) thereof which have a relatively large width dimension.

Due to this, to use the raw shaped material 101' as the outer joint member 101 shown in Fig. 8, it is necessary to subject the opening end of the cup portion 102 to machining such as turning and to cut away the opening end of the cup portion 102 to the position to line X1-X1 in Fig. 9. Further, in the method described in the Japanese Patent Document 1, it is necessary to perform forging by using a large material in consideration of the planing allowance in machining. Consequently, the method described in the Japanese Patent Document 1 results in increased manufacturing cost and deteriorated yield of the outer joint member. There is a possibility that such problems can be solved by changing the outer peripheral shape of the cup portion 102 (in particular, the small-diameter portions 104) to make the width dimension of the opening end surface 107 in its entirety of the cup portion 102 uniform. However, the outer peripheral shape of the cup portion 102 is determined in consideration of the basic performance of the joint including the strength of the joint. Therefore, the outer peripheral shape of the cup portion 102 cannot be changed only for improving the shaping ability at the time of forging (or for enhancing the shape stability after forging).

### Summary of the Invention

The present invention has been made in view of the above problems, and an object of the present invention is to provide an outer joint member for constant velocity universal joint which is inexpensive and is excellent in the incorporation ability of a joint internal component (in particular, a torque transmission member) without affecting the basic performance of the joint.

To solve the above problems, the present invention provides an outer joint member for constant velocity universal joint including a cup portion formed, on the inner surface thereof, with a plurality of track grooves extending in the axial direction, the cup portion having a chamfering portion provided in the region between the track grooves at the inner peripheral edge thereof, at least the inner surface, the track grooves, and the chamfering portion of the cup portion being shaped by forging, wherein the chamfering portion includes a first chamfering portion for allowing the angle shift of the joint, and second chamfering portions which are provided adjacent to both peripheral sides of the first chamfering portion and are inclined in the direction different from the first chamfering portion.

In addition, to solve the above problems, the present invention provides a method for manufacturing an outer joint member for constant velocity universal joint including a bottomed cylindrical cup portion formed, on the inner surface thereof, with a plurality of track grooves extending in the axial direction, the cup portion having a chamfering portion provided in the region between the track grooves at the inner peripheral edge thereof, at least the inner surface and the outer surface of the cup portion being shaped by forging, the method including an ironing step of obtaining the cup portion in a final shape, the ironing step shaping the chamfering portion including a first chamfering portion for allowing the angle shift of the joint, and second chamfering portions which are provided adjacent to both peripheral sides of the first chamfering portion and are inclined in the direction different from the first chamfering portion.

As described above, the second chamfering portions which are inclined in the direction different from the first chamfering portion are provided on both peripheral sides of the first chamfering portion which is an essential configuration for allowing the angle shift of the joint. Therefore, various functions can be added without specially affecting the basic performance of the joint. That is, when the forming form of the second chamfering portions is appropriately adjusted, the second chamfering portions can function as guide faces for incorporating a torque transmission member into the inner periphery (track groove) of the cup portion. In addition, variation in the width dimension between the respective peripheral portions on the opening end surface of the cup portion can be reduced. When variation in the width dimension between the respective peripheral portions on the opening end surface of the cup portion can be reduced, the reduction in area can be uniform. Therefore, variation in the axial extension amount between the respective peripheral portions of the cup portion can be reduced when the outer joint member is shaped by forging (in particular, when the cup portion is shaped into the final shape by ironing). Hence, time necessary for finishing such as turning can be reduced or finishing can be omitted, thereby achieving improvement in production efficiency and yield at the same time.

In the above configuration, the axial position of the bottom end of the first chamfering portion and the axial position of the bottom ends of the second chamfering portions may coincide with each other or may be different from each other.

The outer joint member can further include a shaft portion extending axially and outward from the bottom of the cup portion. In this case, the shaft portion can also be shaped by forging integrally with the cup portion.

A constant velocity universal joint including the outer joint member according to the present invention and a joint internal component accommodated in the inner periphery thereof can be inexpensively manufactured by improvement in the incorporation ability of the joint internal component and improvement in the productivity of the outer joint member, and can exhibit the same performance as the conventional constant velocity universal joint.

The present invention is preferably applicable to an outer joint member for tripod type constant velocity universal joint which has a cup portion which has three large-diameter portions and three small-diameter portions which are alternately arranged in the peripheral direction, the large-diameter portions being formed, on the inner peripheries thereof, with the track grooves, the small diameter-portions each being formed with the chamfering portion at the inner peripheral edge thereof.

In the method for manufacturing the outer joint member according to the present invention, any one of a plurality of pre-steps performed before the ironing step may preliminarily shape the outline shape of the chamfering portion. With this, the cup portion including the chamfering portion can be shaped at higher accuracy.

### Advantageous Effect of the Invention

As described above, according to the present invention, the outer joint member for constant velocity universal joint which is inexpensive and is excellent in the incorporation ability of the joint internal component (in particular, the torque transmission member) without affecting the basic performance of the joint can be provided.

### Brief Description of the Drawings

Fig. 1 is a schematic cross-sectional view of a constant velocity universal joint using an outer joint member according to an embodiment of the present invention;
Fig. 2a is a front view of the outer joint member according to a first embodiment;
Fig. 2b is a cross-sectional view taken along line A-A in Fig. 2a, seen in the direction of the appended arrows;
Fig. 3a is a schematic side view of a cylindrical material processed into the outer joint member of Fig. 2;
Fig. 3b is a schematic side view of a first intermediate shaped object processed into the outer joint member of Fig. 2;
Fig. 3c is a schematic side view of a second intermediate shaped object processed into the outer joint member of Fig. 2;
Fig. 3d is a schematic side view of a third intermediate shaped object processed into the outer joint member of Fig. 2;
Fig. 4a is a schematic front view of a fourth intermediate shaped object;
Fig. 4b is a cross-sectional view taken along line B-B in Fig. 4a, seen in the direction of the appended arrows;
Fig. 5a is a front view of an ironing punch;
Fig. 5b is a side view of the ironing punch;
Fig. 6 is a cross-sectional view of the essential portion of the raw shaped material of the outer joint member immediately after the completion of ironing;
Fig. 7 is a schematic sectional view of the essential portion of an outer joint member according to a second embodiment of the present invention;
Fig. 8 is a front view of a conventional outer joint member; and
Fig. 9 is a schematic sectional view of the outer joint member shown in Fig. 8 manufactured by a conventional manufacturing method.

### Description of the Preferred Embodiments

Hereinafter, an embodiment of the present invention will be described with reference to the drawings.

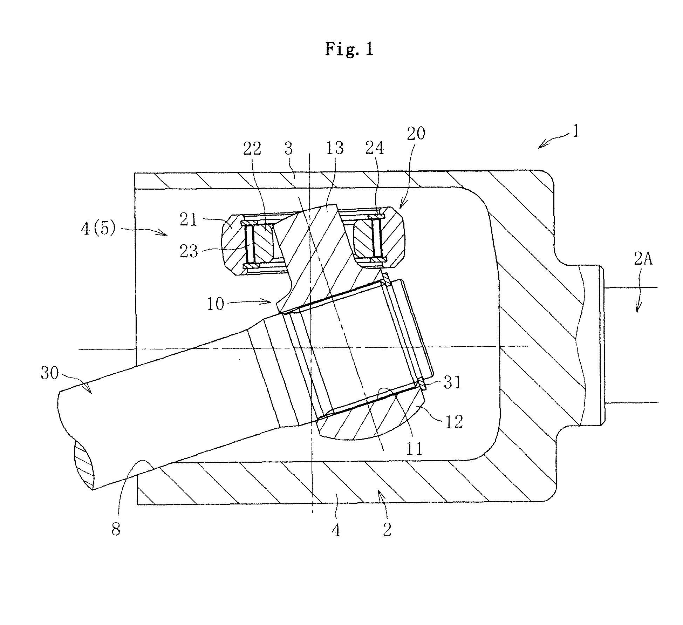

Fig. 1 shows a cross-sectional view of the essential part of a constant velocity universal joint having, as a configuring member, an outer joint member 1 according to an embodiment of the present invention. The constant velocity universal joint is a tripod type constant velocity universal joint (more specifically, a tripod type constant velocity universal joint of the double roller type) which is a kind of plunging type constant velocity universal joint, and mainly has the outer joint member 1, a tripod member 10 as an inner joint member, and a roller 20 as a torque transmission member which is interposed between the outer joint member 1 and the tripod member 10 and transmits torque between both. The tripod member 10 and the roller 20 are accommodated in the inner periphery of a cup portion 2 of the outer joint member 1. Therefore, here, the tripod member 10 and the roller 20 configure a joint internal component. Further, to seal the interior of the joint, in the actual constant velocity universal joint, a boot is provided between the outer joint member 1 and a shaft 30 extending from the tripod member 10, which is not shown here. In addition, typically, an annular groove for fixing the boot is provided on the outer surface of the outer joint member 1, which is not shown here.

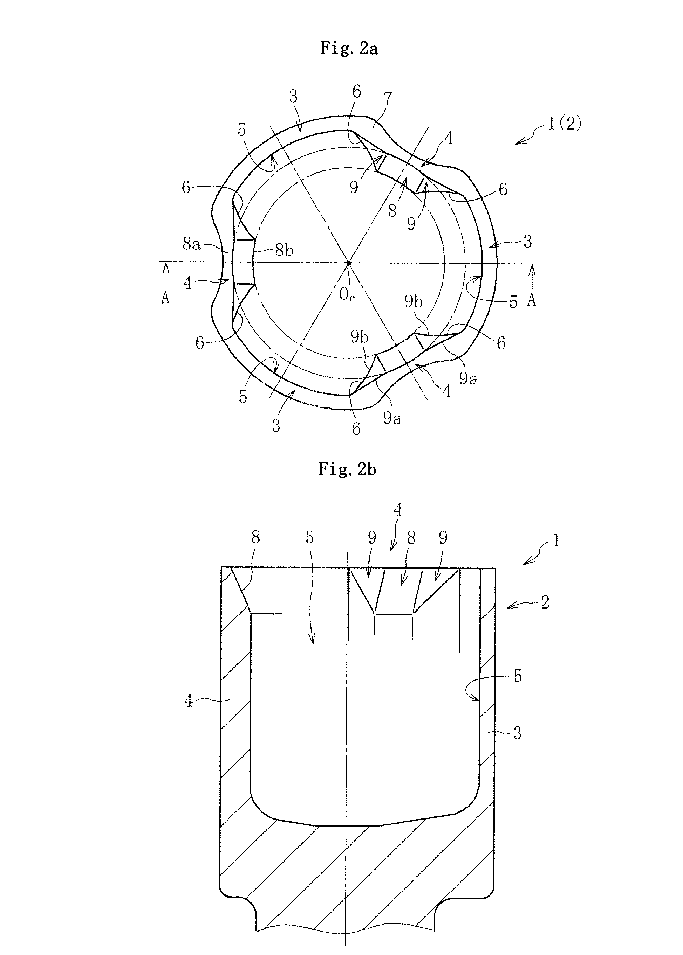

The outer joint member 1 has the bottomed cylindrical cup portion 2 accommodating the tripod member 10 and the roller 20 in the inner periphery thereof, and a shaft portion 2A extending axially and outward from the bottom of the cup portion 2. As shown in Fig. 2a, when seen from the cross section perpendicular to the axis, the cup portion 2 is corolla shaped and has three large-diameter portions 3 and three small-diameter portions 4 which are alternately provided in the peripheral direction, the large-diameter portions 3 being formed, on the inner peripheries thereof, with track grooves 5. Each of the track grooves 5 has a pair of roller guide faces 6 and 6 in a recessed curved surface shape, which are opposite to each other in the peripheral direction. The roller 20 is moved axially along the roller guide faces 6 and 6. A chamfering portion is formed in the region between the track grooves 5 and 5 at the inner peripheral edge of the cup portion 2, here, at the inner peripheral edge of each of the small-diameter portions 4. The chamfering portion includes a first chamfering portion 8 provided in the peripheral center region of the small-diameter portion 4, and second chamfering portions 9 and 9 which are provided adjacent to both peripheral sides of the first chamfering portion 8 (or in the peripheral end regions of the small-diameter portion 4) and are inclined in the direction different from the first chamfering portion 8. As shown in Fig. 2b, the bottom end of the first chamfering portion 8 and the bottom ends of the second chamfering portions 9 and 9 are located in the same axial position.

As shown in Fig. 1, the first chamfering portion 8 is provided for allowing the angle shift of the joint (or for avoiding the interference between the shaft 30 extending from the tripod member 10 and the outer joint member 1 when the joint is angle shifted). Therefore, an opening section line 8a of the first chamfering portion 8 and a bottom section line 8b thereof are formed as arcs in parallel with each other, with center Oc of the cup portion 2 as a center of curvature.

Each of the second chamfering portions 9 is formed in such a manner that an opening section line 9a thereof and a bottom section line 9b thereof cross each other near the groove bottom of the track groove 5 adjacent to the second chamfering portion 9 in the peripheral direction (or near the boundary between the groove bottom of the track groove 5 and the guide face 6). The opening section line 9a is formed in such a manner that the width dimension of an opening end surface 7 in its entirety of the small-diameter portion 4 is substantially uniform (or that variation in the width dimension of the respective peripheral portions of the opening end surface 7 of the small-diameter portions 4 is smaller than the conventional configuration shown in Fig. 8). In addition, the bottom section line 9b is flush with the roller guide face 6. From such a configuration, the second chamfering portion 9 is inclined toward the inside of the track groove 5 (or the inside of the space which is defined by the groove bottom of the track groove 5 and both the roller guide faces 6 and 6 and accommodates the roller 20 therein). Further, although not shown, when seen from the front, the second chamfering portion 9 may be formed to have a smooth surface without unevenness, and can be formed to have a concave surface in which the peripheral center thereof is recessed in the direction away from the track groove 5 and to have a convex surface in which the peripheral center thereof is projected in the direction close to the track groove 5.

In the outer joint member 1 having the above configuration, the cup portion 2 and the shaft portion 2A are integrally shaped by forging, and at least the inner surface of the cup portion 2 is a surface shaped (finished) by forging. That is, the track groove 5 and the chamfering portion (the first and second chamfering portions 8 and 9) are shaped (finished) by forging. A method for manufacturing the outer joint member 1 will be described later in detail.

As shown in Fig. 1, the tripod member 10 integrally has a boss 12 having a hole 11 formed with spline (or serration), and three leg shafts 13 projected radially and outward from the equally divided peripheral portions of the boss 12, the leg shafts 13 each having an outer periphery to which the roller 20 is attached. One end of the shaft 30 is spline fitted into the hole 11. The outer peripheral surface of the portion of the shaft 30 projected to the bottom thereof from the tripod member 10 is formed with an annular groove. A retaining ring 31 is fitted into the annular groove to prevent the shaft 30 from coming off the tripod member 10.

The roller 20 includes a roller assembly made by assembling an outer roller 21 and an inner roller 22 which are provided to be relatively rotatable via a plurality of needle rollers 23 and washers 24 and 24 for preventing the needle rollers 23 from coming off the roller 20. Although not shown in detail, the needle rollers 23 are incorporated in a so-called full type roller state.

The inner peripheral surface of the inner roller 22 is formed to be a convex curved surface (convex arc surface) in which the axial center thereof is a top. Therefore, the inner roller 22, and by extension the roller (roller assembly) 20 can be oscillated and moved axially with respect to the leg shafts 13 of the tripod member 10.

While the outer peripheral surface of the outer roller 21 is formed to be a convex curved surface (convex arc surface) in which the axial center thereof is a top, the roller guide face 6 of the outer joint member 1 is formed in a Gothic arch cross section. Therefore, the outer roller 21 is in angular contact with the roller guide face 6. From such a configuration, the outer roller 21 is less likely to cause runout, and can have a stable posture at the time of rolling. However, the outer roller 21 and the roller guide face 6 may be in circular contact with each other.

As described above, in the tripod type constant velocity universal joint of the double roller type, the roller 20 can be oscillated and moved axially with respect to the leg shafts 13. Therefore, when the outer joint member 1 and the tripod member 10 take an operating angle to transmit rotation power, the outer roller 21 and the roller guide face 6 can be avoided from being oblique to each other. For this reason, the outer roller 21 is guided by the roller guide face 6 so as to hold a posture in parallel with the axis line of the outer joint member 1, and is precisely rolled on the roller guide face 6 in the posture. Therefore, slide resistance at the time of the operation at an operating angle can be reduced, so that slide resistance and inductive thrust can be effectively prevented from occurring.

Hereinafter, a method for manufacturing the outer joint member 1 will be described in detail.

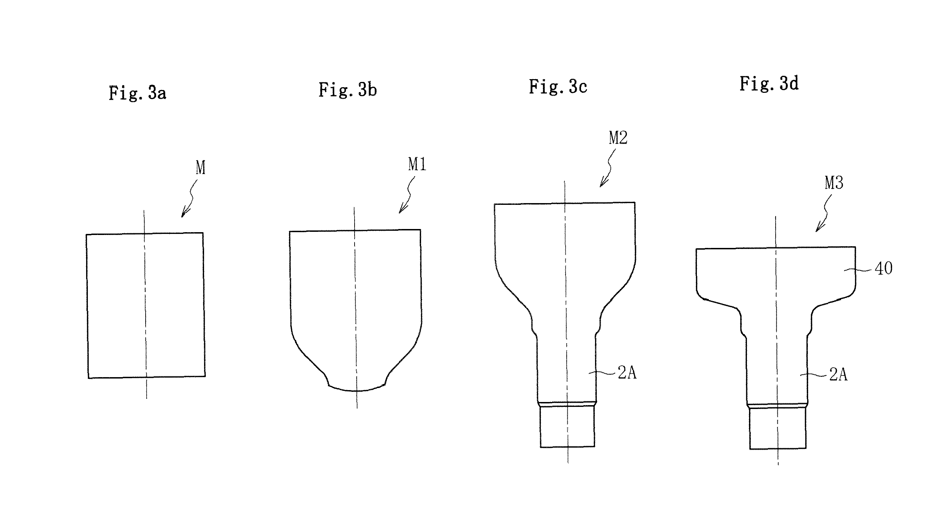

Firstly, a cylindrical metal material M shown in Fig. 3a is subjected to forward extrusion. As shown in Fig. 3b, a first intermediate shaped object M1 in which the outer peripheral edge at one end of the cylindrical material M is rounded and the center at one end of the cylindrical material M is projected is shaped. Then, the first intermediate shaped object M1 is further subjected to forward extrusion. As shown in Fig. 3c, a second intermediate shaped object M2 in which the shaft portion 2A is shaped on the side that the outer peripheral edge thereof is rounded is obtained. Thereafter, the second intermediate shaped object M2 is subjected to upsetting. As shown in Fig. 3d, a third intermediate shaped object M3 in which an upset portion 40 is shaped is obtained.

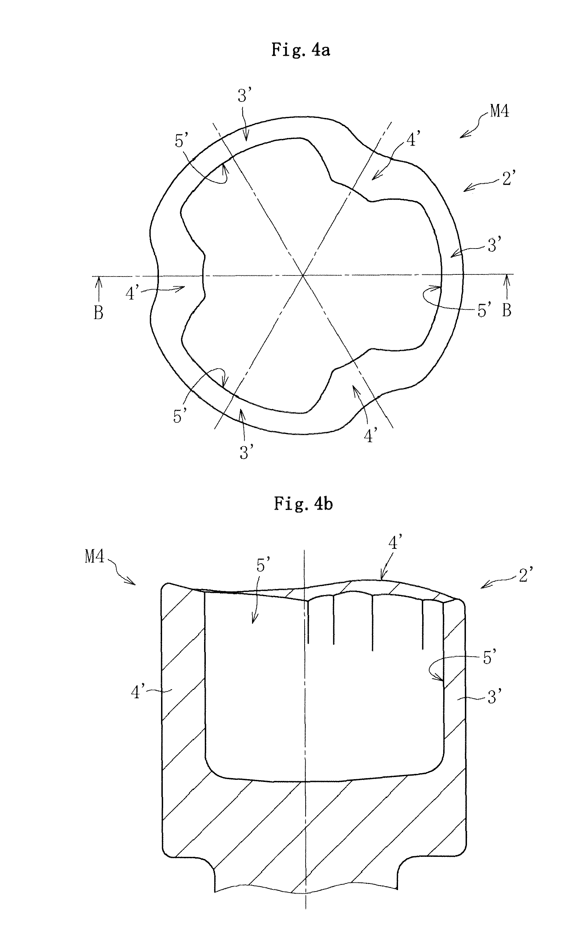

Next, the upset portion 40 of the third intermediate shaped object M3 is subjected to rearward extrusion. A fourth intermediate shaped object M4 having a preliminary cup portion 2' shaped into the cup portion 2 in a later-described ironing step is obtained. As shown in Figs. 4a and 4b, the preliminary cup portion 2' has a shape which is closely analogous to the cup portion 2 as a completed product. That is, the preliminary cup portion 2' has three preliminary large-diameter portions 3' and three preliminary small-diameter portions 4' which are alternately arranged in the peripheral direction, the preliminary large-diameter portions 3' being formed, on the inner peripheries thereof, with preliminary track grooves 5'. The preliminary cup portion 2' (the preliminary large-diameter portions 3' and the preliminary small-diameter portions 4') has a larger wall thickness and a shorter axial dimension than the cup portion 2 as the completed product. No portions corresponding to the first and second chamfering portions 8 and 9 are formed at the inner peripheral edge of each of the preliminary small-diameter portions 4' configuring the preliminary cup portion 2'.

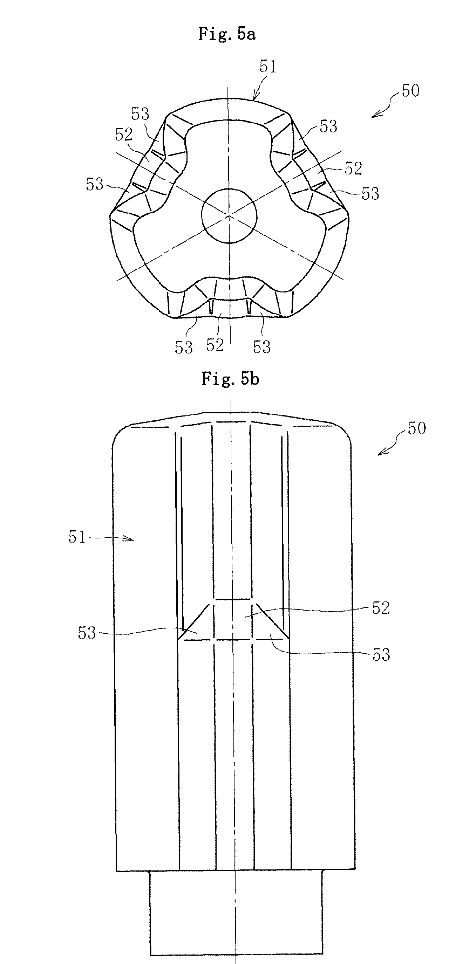

Then, the fourth intermediate shaped object M4 is transferred to the ironing step. In the ironing step, the fourth intermediate shaped object M4 is subjected to ironing (in this embodiment, to cold-ironing). Thereby, a raw shaped material 1' having the cup portion 2 in which the inner surface thereof is shaped into a predetermined shape (completed product shape) is obtained. In the ironing step, the fourth intermediate shaped object M4 is subjected to ironing by using a die device having an ironing punch 50 shown in Figs. 5a and 5b and an ironing die, not shown. The ironing punch 50 has an outer periphery having a shape corresponding to the inner peripheral shape of the cup portion 2. That is, the ironing punch 50 including the track groove 5 has, on the outer periphery thereof, an inner surface shaping portion 51 for shaping the inner surface of the cup portion 2, a first chamfer shaping portion 52 for shaping the first chamfering portion 8, and a second chamfer shaping portions 53 for shaping the second chamfering portions 9. The ironing die has, on the inner periphery thereof, a shaping portion for shaping the outer surface of the cup portion 2.

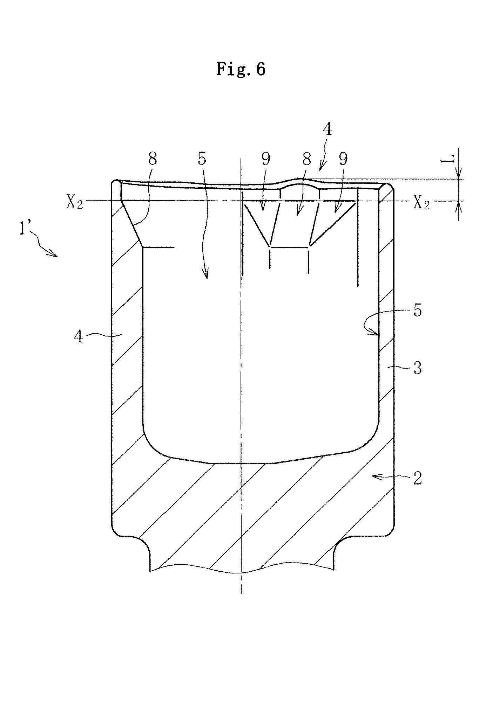

Then, the fourth intermediate shaped object M4 is positioned and fixed into the die device, thereby inserting the ironing punch 50 into the inner periphery of the preliminary cup portion 2'. In this state, the ironing die is relatively moved axially with respect to the fourth intermediate shaped object M4 (ironing punch 50). With the relative movement, the preliminary cup portion 2' extends in the axial direction. At the same time, the inner surface of the preliminary cup portion 2' is plastically deformed to follow the outer portion of the ironing punch 50, and the outer surface of the preliminary cup portion 2' is plastically deformed to follow the inner portion of the ironing die. Thereby, the inner surface of the preliminary cup portion 2' is shaped into the inner peripheral shape of the cup portion 2 as the completed product, so that the outer surface of the preliminary cup portion 2' is shaped into a substantially complete shape. After the completion of ironing, the shaped object is taken out from the die device. As shown in Fig. 6, the raw shaped material 1' of the outer joint member which integrally has the cup portion 2 and the shaft portion 2A, the cup portion 2 having the inner surface formed into a final shape, is obtained. Then, the opening end of the cup portion 2 of the raw shaped material 1' its subjected to turning, and is cut away to line X2-X2 in Fig. 6. The outer surface of the cup portion 2 is subjected to grinding to form the annular groove for fixing the boot, followed by a thermal treatment, thereby completing the outer joint member 1.

As described above, the raw shaped material 1' of the outer joint member 1 is obtained by being sequentially subjected to forward extrusion for obtaining the first intermediate shaped object M1, forward extrusion for obtaining the second intermediate shaped object M2, upsetting for obtaining the third intermediate shaped object M3, rearward extrusion for obtaining the fourth intermediate shaped object M4, and ironing for obtaining the cup portion 2 whose inner surface is shaped into the final shape (completed product shape).

As is apparent from Fig. 6, in the raw shaped material 1' of the outer joint member 1 obtained as described above, the waving degree of the opening end of the cup portion 2 is greatly reduced as compared with the conventional one obtained by the conventional method shown in Fig. 9. In addition, axial dimension L from the opening end of the first chamfering portion 8 of the cup portion 2 to the opening end of the cup portion 2 is shorter than axial dimension L' of the conventional one shown in Fig. 9. Therefore, even when the opening end of the cup portion 2 is subjected to finishing such as turning, the planing allowance therein can be small. Further, the shape of the cup portion 2 after ironing can be significantly stable as compared with the conventional one. Thus, the raw shaped material 1' can also be used as-is without the opening end thereof being subjected to special finishing (or can also be transferred to the post-processing such as the thermal treatment). Therefore, as compared with the conventional one, the manufacturing cost can be reduced and the yield can be improved.

The reason why such an effect can be obtained is that the chamfering portion provided at the inner peripheral edge of the small-diameter portion 4 configuring the cup portion 2 includes the first chamfering portion 8 for allowing the angle shift of the joint and the second chamfering portions 9 and 9 which are provided on both peripheral sides of the first chamfering portion and are inclined in the direction different from the first chamfering portion 8. That is, the second chamfering portions 9 and 9 of the above form are provided on both peripheral sides of the first chamfering portion 8, so that the width dimension of the opening end surface 7 in its entirety in the peripheral direction of the cup portion 2 (small-diameter portions 4) is substantially uniform. Due to this, when the inner surface and the outer surface of the cup portion 2 are shaped by ironing, variation in the axial extension amount between the respective peripheral portions of the cup portion 2 can be reduced.

In addition, the second chamfering portions 9 and 9 of the above form are provided on both peripheral sides of the first chamfering portion 8. Therefore, each second chamfering portion 9 can function as the guide face for incorporating the joint internal component (the roller 20 as the torque transmission member) into the inner periphery of the cup portion 2. From the above, according to the present invention, the outer joint member 1 for constant velocity universal joint which is inexpensive and is excellent in the incorporation ability of the torque transmission member without affecting the basic performance of the joint can be provided.

Although the outer joint member 1 and the method for manufacturing the same according to an embodiment of the present invention have been described above, various changes can be added to these within the scope without departing from the gist of the present invention.

Specifically, any one of the manufacturing steps of the outer joint member 1 (the raw shaped material 1' of the outer joint member 1) performed before ironing, for example, the step of obtaining the fourth intermediate shaped object M4 having the preliminary cup portion 2' may preliminarily shape the outline shape of the chamfering portion (the first and second chamfering portions 8 and 9). With this, the cup portion 2 can be shaped at higher accuracy.

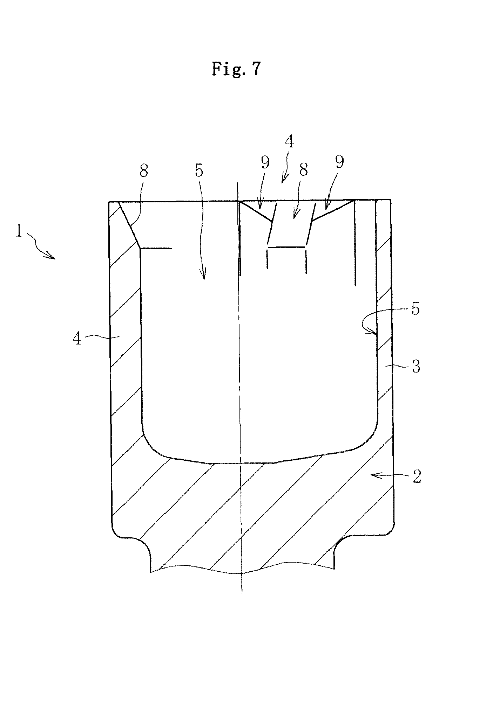

In addition, as for the configuration of the outer joint member 1, as shown in Fig. 7, the position of the bottom end of the first chamfering portion 8 and the position of the bottom ends of the second chamfering portions 9 and 9 may be different from each other. In the illustrated example, the bottom ends of the second chamfering portions 9 and 9 are located near the axial center of the first chamfering portion 8.

In the above, the present invention is applicable to the outer joint member 1 for tripod type constant velocity universal joint of the double roller type. Needless to say, the present invention is also applicable to an outer joint member for tripod type constant velocity universal joint of the single roller type, an outer joint member for double offset type constant velocity universal joint, and an outer joint member for other constant velocity universal joints.

### Description of Reference Signs

- 1: Outer joint member
- 1': Raw shaped material
- 2: Cup portion
- 2A: Shaft portion
- 3: Large-diameter portion
- 4: Small-diameter portion
- 5: Track groove
- 7: Opening end surface
- 8: First chamfering portion
- 9: Second chamfering portion
- 10: Tripod member (inner joint member)
- 20: Roller (torque transmission member)
- 50: Ironing punch
- 52: First chamfer shaping portion
- 53: Second chamfer shaping portion

## Claims

1. An outer joint member for constant velocity universal joint comprising:
a cup portion formed, on an inner surface thereof, with a plurality of track grooves extending in an axial direction, the cup portion having a chamfering portion provided in a region between track grooves at an inner peripheral edge thereof, at least the inner surface, the track grooves, and the chamfering portion of the cup portion being shaped by forging,
wherein the chamfering portion includes a first chamfering portion for allowing an angle shift of the joint, and second chamfering portions which are provided adjacent to both peripheral sides of the first chamfering portion and are inclined in a direction different from the first chamfering portion.

2. The outer joint member for constant velocity universal joint according to claim 1, wherein an axial position of a bottom end of the first chamfering portion and an axial position of bottom ends of the second chamfering portions coincide with each other.

3. The outer joint member for constant velocity universal joint according to claim 1, wherein the axial position of the bottom end of the first chamfering portion and the axial position of the bottom ends of the second chamfering portions are different from each other.

4. The outer joint member for constant velocity universal joint according to claim 1, wherein the cup portion has three large-diameter portions and three small-diameter portions which are alternately arranged in the peripheral direction, the large-diameter portions having, on inner peripheries thereof, the track grooves, the small-diameter portions each having the chamfering portion at an inner peripheral edge thereof.

5. The outer joint member for constant velocity universal joint according to claim 1, further comprising a shaft portion extending axially and outward from the bottom of the cup portion, the shaft portion being shaped by forging integrally with the cup portion.

6. A constant velocity universal joint comprising the outer joint member according to claim 1, and a joint internal component accommodated in the inner periphery thereof.

7. A method for manufacturing an outer joint member for constant velocity universal joint including a cup portion formed, on an inner surface thereof, with a plurality of track grooves extending in an axial direction, the cup portion having a chamfering portion provided in a region between the track grooves at an inner peripheral edge thereof, at least the inner surface, and the track grooves, and the chamfering portion of the cup portion being shaped by forging, the method comprising
an ironing step of obtaining the cup portion in a final shape, the ironing step shaping the chamfering portion including a first chamfering portion for allowing an angle shift of the joint, and second chamfering portions which are provided adjacent to both peripheral sides of the first chamfering portion and are inclined in a direction different from the first chamfering portion.

8. The method for manufacturing the outer joint member for constant velocity universal joint according to claim 7, wherein any one of a plurality of pre-steps performed before the ironing step preliminarily shapes an outline shape of the chamfering portion.

9. The method for manufacturing an outer joint member for constant velocity universal joint according to claim 7 or 8, wherein the ironing step is performed by cold working.
